# EUROPEAN PATENT APPLICATION

(11) **EP 2 634 553 A1**
(43) Date of publication of application: **04.09.2013**
(21) Application number: 12005148.7
(22) Date of filing: 12.07.2012
(51) Int. Cl.: G01K 7/16, G01D 3/08, G01D 21/02, G01L 1/22, G06F 3/041, G01L 9/02

(54) **Temperature sensing device**

(30) Priority: 28.02.2012 EP 12001308
(71) Applicant: Sony Mobile Communications AB, 221 88 Lund (SE)
(72) Inventor: Aberg, Peter, 288 31 Vinslöv (SE); Midholt, Magnus, 223 53 Lund (SE); Rosqvist, Björn, 226 54 Lund (SE); Knutsson, Lars, 275 95 Sjöbo (SE)
(74) Representative: Banzer, Hans-Jörg

(57) **Abstract**

A temperature sensing device is provided. The temperature sensing device comprises a touch layer (3) configured to change a dimension of the touch layer (3) in at least one direction due to a change of temperature of the touch layer (3). The temperature sensing device comprises furthermore a strain gauge device (7) arranged at the touch layer (3) and configured to detect a strain in the at least one direction. A processing unit (10) of the temperature sensing device is configured to determine a temperature of the touch layer (3) based on the signal of the strain gauge device (7).

## Description

### FIELD OF THE INVENTION

The present invention relates to a temperature sensing device, especially a temperature sensing device which is integrated in a touch layer of a touch sensor. The present application relates furthermore to a mobile device comprising the temperature sensing device.

### BACKGROUND OF THE INVENTION

Mobile devices, for example mobile phones and especially so called smartphones are not only used for mobile communication, but also in a lot of other fields of daily life, for example personal organization, gaming, and sports activities. Therefore, many people have their mobile devices always with them. Furthermore, there is a trend that a lot of medical examination is done by yourself. However, since people are not always at home, for example traveling or at work, they do not always have access to medical equipment, like for example a thermometer.

Therefore, it is an object of the present invention to provide a temperature sensing device which can be easily implemented at low cost in a mobile device.

### SUMMARY OF THE INVENTION

According to the present invention, this object is achieved by a temperature sensing device as defined in claim 1 and a mobile device as defined in claim 8. The dependent claims define preferred and advantageous embodiments of the invention.

According to an aspect of the present invention, a temperature sensing device is provided. The temperature sensing device comprises a touch layer, a strain gauge arranged at the touch layer and a processing unit. The touch layer is configured to change a dimension of the touch layer in at least one direction due to a change of temperature of the touch layer. The strain gauge device is configured to detect the strain in the at least one direction. The processing unit is coupled to the strain gauge device and configured to determine a temperature of the touch layer based on a signal of the strain gauge device.

Many devices, especially mobile devices like mobile phones or smartphones, provide a touch sensitive surface as a user interface. The touch sensitive surface may be configured to determine where a user touches or approaches the touch sensitive surface. Additionally, the touch sensitive surface may be configured to determine a force which is applied by the user on the touch sensitive surface, for example in a direction perpendicular to the surface of the touch sensitive surface. Therefore, the touch sensitive surface may be provided with strain gauge sensors or strain gauge devices to detect deformation of the touch sensitive surface for determining the force being applied to the touch sensitive surface. The touch sensitive surface, which may also be called touch layer, may change a dimension in one or more directions when being heated or cooled down. Therefore, a strain generated by the change of dimension of the touch sensitive surface can be detected by a strain gauge device and a temperature of the touch sensitive surface can be determined from a signal from the strain gauge device. Using a strain gauge device instead of a traditional temperature sensor has the advantage that it is much more easier to be integrated in a touch sensitive surface which may already provide strain gauge sensors or strain gauge devices for determining a force being applied by the user to the touch sensitive surface. Therefore, using a strain gauge device for temperature sensing does not require any extra process step for manufacturing the touch layer. This may save extra cost for implementing a temperature sensing in a mobile device.

According to an embodiment, the temperature sensing device furthermore comprises a display which may be arranged below the touch layer. The display and the touch layer in combination may provide a so called touch screen. The processing unit is configured to display the determined temperature on the display. Thus, an application like a fever thermometer can be realized at low cost.

According to another embodiment, the strain gauge device may comprise a piezoresistive material. The strain gauge device may comprise for example indium tin oxide (ITO). Furthermore, the strain gauge device may comprise a material with a high temperature coefficient of resistance (TCR). These materials provide a good responsiveness to a strain when being arranged or coated on the touch layer. Furthermore, thin layers of these materials may provide transparency and may therefore be arranged in a display area of a touch screen. Therefore, the touch layer may comprise a touch layer of a capacitive touch sensor or a window glass of a display. Electrical structures of the capacitive touch sensor or the display may be made of the piezoresistive material, e.g. indium tin oxide, or a material with a high TCR. Therefore, additional process steps for realizing the temperature sensing device can be avoided.

According to another embodiment, the temperature sensing device comprises furthermore a frame for supporting the touch layer. The touch layer is attached along an edge of the touch layer to the frame. The strain gauge device is arranged in an area where the touch layer is attached to the frame. Especially, the strain gauge device may be arranged such that it is configured to detect a strain in a direction essentially along the edge of the touch layer along which the touch layer is attached to the frame. A location, where the strain gauge device is arranged, should be selected such that the touch layer in this area is protected from being deformed by a touch force applied by the user to the touch layer. In the area where the touch layer is attached to the frame there is only a low deformation of the touch layer in response to a force being applied from a user to the touch layer. Especially, in the direction of the edge along which the touch layer is attached to the frame, there is only very small deformation response when the user applies a force to the display, as the frame provides a mechanical stiffness in this area. However, a change in dimension along the edge of the touch layer due to a change of temperature of the touch layer will still occur and can therefore be detected by the strain gauge device to determine the temperature.

According to another aspect of the present invention, a mobile or portable device is provided. The mobile device comprises the above-described temperature sensing device. The mobile device comprises for example a mobile phone, especially a smartphone with a touch screen, a personal digital assistant, a mobile music player or a navigation system.

Although specific features described in the above summary and the following detailed description are described in connection with specific embodiments and aspects, it is to be understood that the features of the embodiments and aspects may be combined with each other, unless specifically noted otherwise.

### BRIEF DESCRIPTION OF THE DRAWINGS

The invention will now be described in more detail with reference to the accompanying drawings.
Fig. 1 shows a mobile device according to an embodiment of the present invention.
Fig. 2 shows an enlarged partial view of the mobile device according to an embodiment of the present invention.
Fig. 3 shows a circuit diagram for providing a signal of a strain gauge device in a temperature sensing device according to an embodiment of the present invention.

### DETAILED DESCRIPTION OF PREFERRED EMBODIMENTS

In the following, exemplary embodiments of the invention will be described in more detail. It has to be understood that the features of the various exemplary embodiments described herein may be combined with each other unless specifically noted otherwise. Same reference signs in the various drawings and the following description refer to similar or identical components.

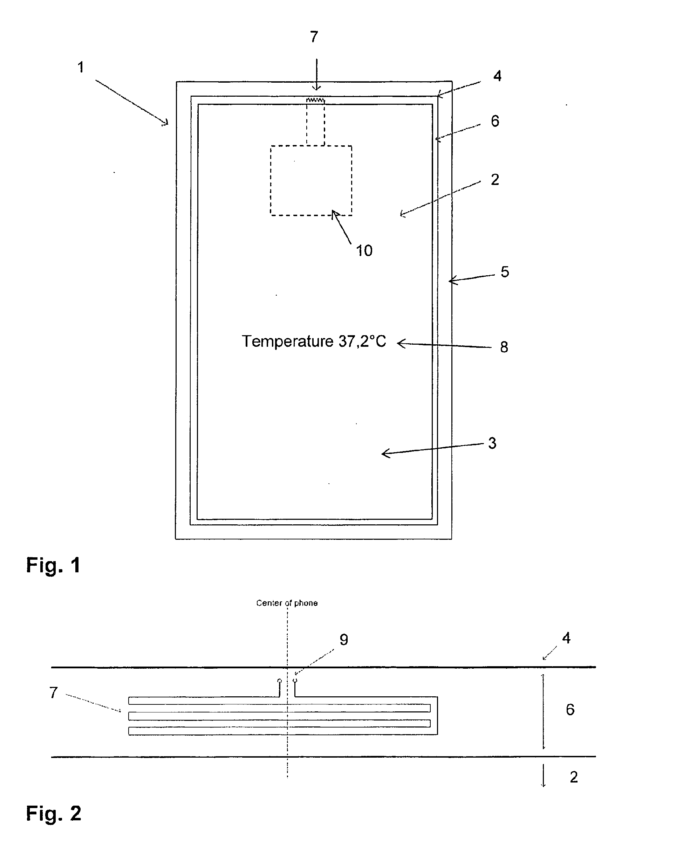

Fig. 1 shows a mobile phone 1 according to an embodiment of the present invention. The mobile phone 1 is a so called smartphone. However, the mobile phone 1 may comprise any other type of mobile phone or mobile device, for example a mobile music player or a mobile personal digital assistant. At the front side of the mobile phone 1, a touch screen is provided as a user interface. The touch screen comprises a window glass 3 or touch layer 3 for being touched by the user and a display arranged behind the window glass. Thus, a visible area 2 on the window glass 3 is present where optical information may be output to the user via the display and touch information from the user touching the window glass 3 may be received. The mobile phone comprises furthermore a processing unit 10, which may be located below the display and is therefore shown in Fig. 1 with dashed lines. An edge 4 of the window glass 3 is glued to a frame 5 of a housing of the mobile phone 1 along a glued area 6. For hiding the glued area from being seen by the user, the window glass 3 may provide a so called black print in the glued area 6 which means that the window glass 3 provides a black color in this glued area 6 such that the user cannot see the glued connection between the window glass 3 and the frame 5. At for example a lower side of the window glass 3, especially in the glued area 6, a strain gauge structure 7 may be printed or coated on the window glass 3. The strain gauge structure 7 may comprise for example indium tin oxide (ITO) or a material with a high temperature coefficient of resistance. The strain gauge structure 7 will be described in more detail in connection with Fig. 2. The strain gauge structure 7 is coupled to the processing unit 10 which receives a signal from the strain gauge structure 7 and evaluates a temperature value corresponding to a temperature at the strain gauge structure 7. The processing unit 10 may be adapted to control the display of the mobile phone 1 such that the temperature evaluated is displayed as an output 8 on the display of the mobile phone 1.

Fig. 2 shows the strain gauge structure 7 in the glued area 6 in more detail. The strain gauge structure 7 may comprise a continuous line of indium tin oxide or a material with a high temperature coefficient of resistance printed or coated on the window glass 3 in the glued area 6 in a meander like arrangement as shown in Fig. 2. The meander like arrangement extends essentially in the horizontal direction as shown in Fig. 2. Therefore, the strain gauge structure 7 is responsive essentially in the horizontal direction. Due to the arrangement of the strain gauge structure 7 in the glued area 6, the strain gauge structure 7 has only a very low responsiveness to a force applied by the user to the glass window 3. However, a change in temperature of the glass window 3 changes a dimension of the glass window 3 and thus the strain gauge structure 7 is responsive to this change in dimension due to the temperature of the glass window 3. Furthermore, due to the orientation of the strain gauge structure 7 essentially in the horizontal direction it is sensitive in a direction where not much strain occurs when the user pushes the glass window 3 or the display with force. The strain gauge structure 7 may be arranged as shown in Fig. 1 in the top center of the touch screen, for example covered additionally by a logo of the mobile phone 1. Connectors 9 for connecting the strain gauge structure 7 to the processing unit 10 may also be provided at the top center of the window glass 3. The temperature measured by the processing unit 10 may be output for example as a fever thermometer temperature 8 on the display.

At the window glass 3 or the display further strain gauge structures (not shown) may be provided along other edges of the window glass 3 or in the visible area 2. These further strain gauge structures may be used for detecting a strain due to a force applied by the user on the window glass 3, especially in a direction perpendicular to a display surface of the touch screen. The strain gauge structure 7 and the further strain gauge structures may be printed or coated in a same method step when producing the touch sensitive surface of the touch screen. Therefore, no additional or extra processing steps for providing the strain gauge structure 7 are necessary, if the mobile phone 1 is already provided with sensors for detecting a force being applied by the user. Furthermore, a structure of indium tin oxide (ITO) may be arranged in the visible area 2 for capacitive detecting where a user touches the touch screen.

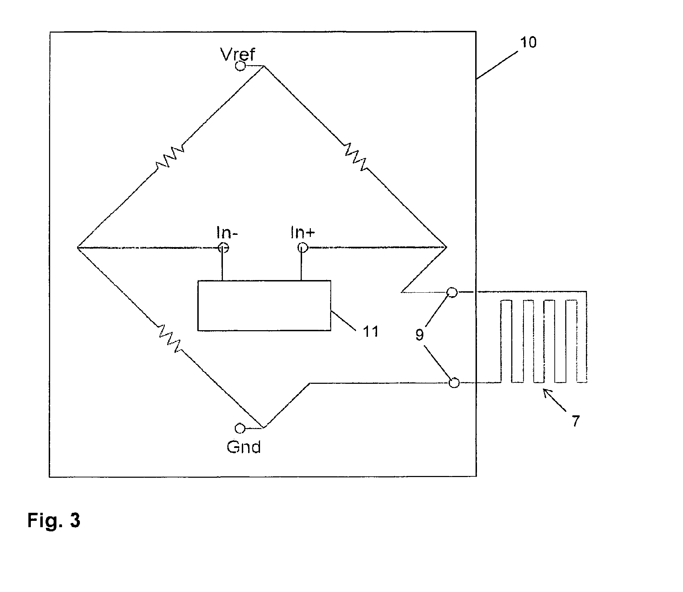

Fig. 3 shows a circuit diagram for evaluating a signal provided by the strain gauge structure 7. The circuit may be part of the processing unit 10. The circuit comprises a so called balanced quarter Wheatstone bridge where the strain gauge structure 7 is coupled to one leg of the Wheatstone bridge. In the other legs of the Wheatstone bridge appropriate resistors are provided or the Wheatstone bridge may be balanced actively with a digital-to-analog converter. A measuring system 11 coupled to the Wheatstone bridge may provide an analog-to-digital converter, filters and amplifiers to detect the unbalance of the Wheatstone bridge due to a signal change of the signal provided by the strain gauge structure 7. The measuring system 11 will reflect the temperature at the specific point where the strain gauge structure 7 is located. The Wheatstone bridge may be supplied with a reference voltage Vref, for example a power supply voltage of the mobile phone 1, and ground Gnd.

While exemplary embodiments have been described above, various modifications may be implemented in other embodiments. For example, the strain gauge structure 7 may be arranged at any other position in the glued area 6, for example in a corner of the window glass 3. Furthermore, the strain gauge structure 7 may be arranged in an area outside the glued area 6 and outside the visible area 2 which means that the strain gauge structure 7 is in an area where a user usually does not apply a force to the window glass 3. Furthermore, the strain gauge structure 7 may be arranged on any other kind of touch layer of different materials than glass, for example a resin layer or a top layer of a display.

Finally, it is to be understood that all the embodiments described above are considered to be comprised by the present invention as it is defined by the appended claims.

## Claims

1. A temperature sensing device, comprising
- a touch layer (3) configured to change a dimension of the touch layer (3) in at least one direction due to a change of temperature of the touch layer (3),
- a strain gauge device (7) arranged at the touch layer (3) and configured to detect a strain in the at least one direction, and
- a processing unit (10), coupled to the strain gauge device (7) and configured to determine a temperature of the touch layer (3) based on a signal of the strain gauge device (7).

2. The temperature sensing device according to claim 1, further comprising:
- a display,
wherein the processing unit (10) is configured to display the determined temperature (8) on the display.

3. The temperature sensing device according to claim 1 or 2, wherein the strain gauge device (7) comprises a piezoresistive material.

4. The temperature sensing device according to any one of the preceding claims, wherein the strain gauge device (7) comprises indium tin oxide or a material with a high temperature coefficient of resistance.

5. The temperature sensing device according to any one of the preceding claims, wherein the touch layer (3) comprises a touch layer of a capacitive touch sensor or a window glass of a display.

6. The temperature sensing device according to any one of the preceding claims, further comprising:
- a frame (5) for supporting the touch layer (3), the touch layer (3) being attached along an edge (4) of the touch layer (3) to the frame (5),
wherein the strain gauge device (7) is arranged in an area (6) where the touch layer (3) is attached to the frame (5).

7. The temperature sensing device according to claim 6, wherein the strain gauge device (7) is configured to detect a strain in a direction essentially along the edge (4) of the touch layer (3) along which the touch layer is attached to the frame (5).

8. A mobile device comprising a temperature sensing device according to any one of the preceding claims, wherein the mobile device (1) comprises at least one device of a group consisting of a mobile phone, a personal digital assistant, a mobile music player, and a navigation system.
